# EUROPEAN PATENT SPECIFICATION

(11) **EP 1 405 782 B1**
(45) Date of publication and mention of the grant of the patent: **14.11.2012**
(21) Application number: 03396090.7
(22) Date of filing: 30.09.2003
(51) Int. Cl.: B62D 12/00, B62D 11/02, E01H 4/02

(54) **Terrain preparing machine with a steering control arrangement**
Geländebearbeitungsmaschine mit Steuerungssystem für die Lenkung
Machine pour la préparation du terrain avec un système de contrôle de direction

(30) Priority: 01.10.2002 FI 20021743
(43) Date of publication of application: 07.04.2004
(73) Proprietor: Kässbohrer Geländefahrzeug AG, 88471 Laupheim (DE)
(72) Inventor: Carlson, Tore (Mr.), 65760 Iskmo (FI)
(74) Representative: Patentanwälte Ruff, Wilhelm, Beier, Dauster & Partner

(56) References cited:
- EP-A- 0 066 677
- US-A- 3 215 219
- US-A- 3 650 343
- US-A- 3 768 583
- US-A- 4 572 315
- US-A- 6 039 133
- US-B1- 6 167 982
- US-B1- 6 283 237

## Description

### BACKGROUND OF THE INVENTION

The present invention relates to a terrain-preparing machine according to the preamble of claim 1. Such a machine is know, for instance, from US-A-3768583. The invention also relates to a method for manoeuvring such a terrain-preparing machine according to claim 5.

Such a terrain-preparing machine as a snow preparing machine for ski slopes or ski trails is generally provided with one or more machining tools, such as a snow groomer that can be pulled on a ski slope or on a ski trail. When used for instance on a ski slope, the machining tool aims to pulverize the snow on the slopes and to provide a surface resembling a washboard that easily freezes. Such a surface also plays an important part in downhill skiing.

The preparing machine that pulls different machining tools is typically steered so that the driver of the machine adjusts the speed of the tracks that drive the machine along the terrain thereof. The driver then attains a turning radius in the machine by forcing for instance by means of hydraulics the tracks to rotate at different speeds, thus creating the turning radius. In general, such an adjustment is carried out either using a steering wheel or one or more control levers provided in the machine.

The machining tools in the preparing machine are typically connected to the machine in the rear part thereof using a towing hitch provided with manoeuvring means, such as hydraulic cylinders for turning the towing hitch. Such a towing hitch is pivoted so that it may turn to the right and to the left in relation to the machine. When the manoeuvring means are set in the float position, the machining tool may turn freely behind the machine, and owing to the weight thereof mainly follow in the tracks of the machine. In addition, current towing hitches frequently comprise an automatic centering function, which means that the driver no longer has to search for the centre of the towing hitch manually. The automatic centering function is also used when the machining tool is lifted up into a transfer position.

However, the prior art has several disadvantages and deficiencies. For instance, when the preparing machine is used on a downhill slope, the manoeuvring means of the towing hitch have to be locked in order to avoid the weight of the machining tool to unrestrainedly move the towing hitch and the machining tool sideways. The movement of the machining tool sideways results partly in that the machine performs poorer-quality work and partly in that the risk for the machining tool to get stuck on objects in the terrain, such as trees, stones, poles or the like, increases. In order to be able to acceptably prepare for instance a ski slope or a ski trail, during the operation of the preparing machine the driver must therefore most often simultaneously operate the turning position of the machining tool manually. This means that the driver has to handle both the control and the lever(s) steering the machining tool and the towing hitch thereof at the same time as he steers the machine with the typical steering devices thereof, such as a steering wheel or lever(s). This means that a great deal of the driver's concentration is used to control where the machining tool is placed, which results in time-consuming work or in the worst case work of poorer quality.

A preparing machine steered as described above always has the disadvantage that the speed of the tracks must also be reduced on one side of the machine in order to be able to steer the machine. In practice, a brake is put on the tracks on one side of the machine and at the same time, the speed of the tracks is increased on the other side of the machine. Since the driving power must be increased in order to be able to provide a higher speed on the tracks on one side and a braking force is applied in order to reduce the speed on the tracks on the other side, a great deal of the machine's driving power will be used for steering and not to move the machine forward. In order to compensate for this loss of power, the components in the driving unit must be over-dimensioned in order not to reduce the working speed during steering.

### BRIEF DESCRIPTION OF THE INVENTION

The present invention substantially allows avoiding the problems of the prior art solutions. It is therefore an object of the invention to provide an easily handled terrain-preparing machine having a great reliability of operation with an optimally dimensioned driving unit. This object is solved in accordance with the invention by the terrain-preparing machine according to the invention comprising the characteristics indicated in independent claim 1. A method for manoeuvring such a terrain-preparing machine is described by the characteristics defined in claim 5.

The basic idea of the invention is that the driver should mainly be able to direct his attention on steering the basic vehicle of the preparing machine in question and not really having to particularly intervene in manoeuvring the machining tool connected to the vehicle.

Normally the basic vehicle is thus manoeuvred by adjusting the speed of the two transfer elements provided in the vehicle regarding one another. When the transfer elements are driven with the same speed the vehicle moves straight forward. When the speed of the left transfer element is reduced and/or the speed of the right transfer element increases, the vehicle turns to the left. When the speed of the right transfer element is reduced and/or the speed of the left transfer element increases, the vehicle turns to the right. Such an adjustment is carried out by the driver using a steering device such as a steering wheel or one or more control levers and is from hereon referred to as "skid steering".

Hereafter the term "terrain" is used in the description to indicate the surface comprising snow, grass, asphalt, sand etc, on which the preparing machine moves.

The rear end of the preparing machine is provided with one or more machining tools with a specific or common pivoted towing hitch. Such a towing hitch is provided with one or more manoeuvring means making sure that the towing hitch can be steered to the left and to the right in relation to the driving direction of the machine. If the manoeuvring means comprise for instance hydraulic cylinders, these are driven by means of a direction valve, which is manoeuvred electrically, hydraulically or mechanically manually by hand.

In the present invention, the operation of the towing hitch connected to the basic vehicle is synchronized with the skid steering of the basic vehicle. Such synchronization is carried out in the preferred embodiment described below using a common steering unit in such a manner that the towing hitch is continuously placed in such a position that it is forced to follow the cornering of the basic vehicle. The steering unit may comprise both mechanical means for connecting drive and manoeuvring means included in the machine as well as one or more electrical regulating units, by which the function of the drive and manoeuvring means are operated.

In the following description the terms "up", "down", "above", "below" and so on indicate directions in relation to the control arrangement or the construction details thereof as shown in the appended figures.

The arrangement of the present invention allows achieving several significant advantages over the prior art. The object of the invention is therefore to automatize the synchronization of the steering of the basic vehicle and the turning of the towing hitch so that the driver only needs to carry out one manoeuvring operation. If the driver steers the basic vehicle, the machining tool connected to the vehicle is automatically forced to follow in the tracks of the vehicle. Then again, it is possible that the driver steers the machining tool with a towing hitch connected thereto, whereupon the steering signals cause the manoeuvring of the basic vehicle to be synchronized. Naturally, the basic vehicle and the machining tool can be simultaneously steered.

The driver of the preparing machine according to the invention easily handles the steering of the vehicle with only one hand and does not really have to concentrate on whether the machining tool connected to the basic vehicle operates properly, instead the machining tool automatically carries out the purpose thereof. The driver of the vehicle is then for instance able to concentrate on using a rock blade arranged at the front of the machine. Above all, the driver is able to concentrate on the driving and thus avoid all eventual collisions and other accidents within the area in which the preparation is in progress. It also becomes much easier to learn to drive the preparing machines according to the invention and consequently it becomes much more easier to present a better result for instance on the surface of the ski slope or the ski trail to be prepared.

Since the present specification describes how machining tools and basic vehicles are followed in the tracks of the preparing machine, it should be pointed out that this does not have to be carried out unconditionally. Situations may arise, when it is necessary to be able to turn the machining tool manually and therefore this function should always be available as an alternative for the driver.

Such situations may also arise, where it is desirable to steer the machining tool in the opposite direction than what has been described above, and this should also be possible. Consequently, the present invention can be provided with what is known as an inversion function, whereby it is possible to operate the machining tool to be steered in the "incorrect" direction. The reason for such a function can be described as follows. If the driver, who operates the preparing machine, is driving sideways over a hill (generally referred to as "aslant"), a need arises to let the towing hitch turn upwards on the hill, at the same time as the basic vehicle is steered downwards on the hill. This is carried out because the two forces partly in the basic vehicle and partly in the towing hitch and the machining tool must counteract one another, which helps the machine to move straight even though it leans heavily. It is of advantage in such a driving situation that the transfer element located higher up on the hill work with a greater force. If the transfer element located lower down the hill work with a greater force, there is a high risk of burying said transfer element if the terrain is soft. The reason for this is that a large part of the basic vehicle's weight rests upon the transfer element, which is placed lower down the hill (the centre of gravity line hits this transfer element if the hill leans heavily).

A terrain-preparing machine according to the present invention also loads the machining tool and the towing hitch thereof less than in the prior art solutions, and said machining tool therefore shows greater durability and less demand for maintenance.

Further advantages and details of the invention are explained in more detail in the description below.

### DESCRIPTION OF THE DRAWINGS

In the following the invention is explained in greater detail with reference to the drawing, in which
Figure 1 schematically shows a preparing machine comprising a basic vehicle partly in cross section with a towing hitch connected thereto and a machining tool, the towing hitch and the machining tool being shown in two different positions, and
Figure 2 schematically shows a hydraulic schedule for a solution according to the invention.

### DESCRIPTION OF PREFERRED EMBODIMENTS

Preferred embodiments of the terrain-preparing machine are described in the following with reference to the above figures. The solutions comprise the structural parts shown in the figures, each one being referred to with respective reference numerals. These reference numerals correspond to the reference numerals indicated in the description below.

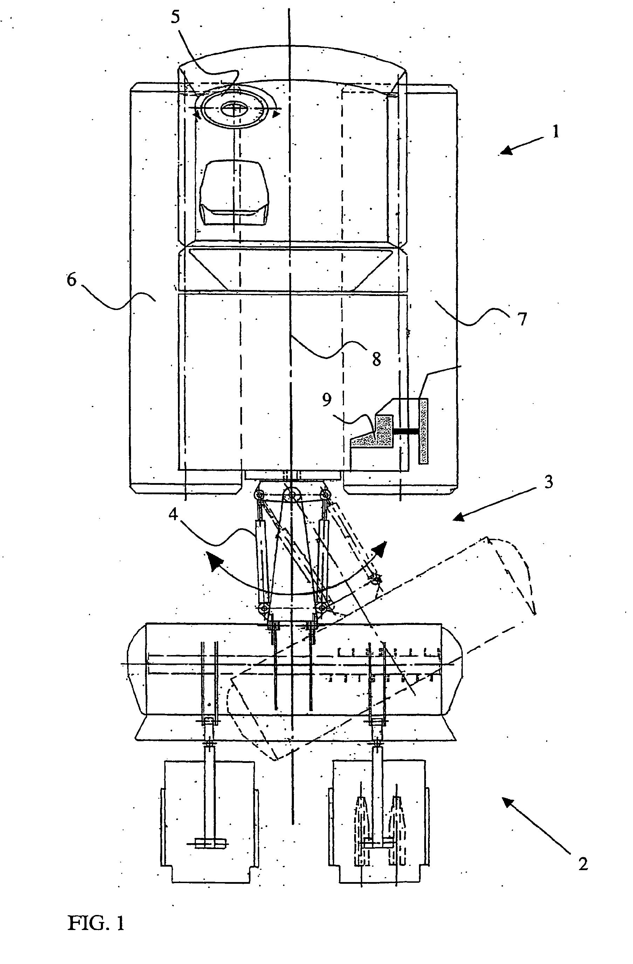

In accordance with Figure 1, the present snow preparing machine comprises a basic vehicle 1 and at least one machining tool 2. The machining tools are preferably each one pivotedly connected to the basic vehicle using a specific towing hitch 3 or eventually using more tools with a common towing hitch. The machining tool comprises in the working example shown a snow groomer for preparing the ski slopes or ski trails, but may also comprise other machining tools, which can be connected to the basic vehicle. The position of the machining tool in relation to the basic vehicle is adjusted in general using one or more manoeuvring means 4 arranged to move the tool at least sideways relative to the travel direction of the basic vehicle.

In order to operate the above snow preparing machine, the basic vehicle thereof comprises steering devices 5 known per se, such as a steering wheel or at least one control lever. The steering devices are primarily arranged to adjust the function of transfer elements 6 and 7 included in the basic vehicle on the opposite sides thereof, preferably parallel to a longitudinal axis 8 of the machine. The transfer elements generally comprise tracks, which are made to rotate by means of driving arrangements 9 in order to move the machine in relation to the terrain thereof.

The snow preparing machine is manoeuvred in the preferred embodiment by skid steering. Such steering adjusts the speed of the transfer elements 6 and 7 located on the opposite sides of the basic vehicle in relation to one another. If it is desired that the machine follow a substantially straight course, the transfer elements are arranged to rotate at the same speed. If it is desired that the machine be turned in either direction, the rotation speed between the transfer elements should be altered, whereby the basic vehicle skids relative to the terrain thereof and is turned about the vertical centre axis of the machine. When for instance the speed of the transfer element 6 located on the left in the transfer direction is reduced and/or the speed of the transfer element 7 located in the corresponding direction on the right is increased, the machine turns to the left in the transfer direction thereof. When the speed of the transfer element 7 located in the transfer direction on the right is reduced and/or the speed of the transfer element 6 located in the corresponding direction on the left is increased, the machine turns to the right in the transfer direction thereof.

The driving arrangement 9 may be composed of both one or more internal combustion engines and electric motors. What are typically used in the snow preparing machines are hydraulic motors driven by means of a pressure medium, hydraulic oil that obtains the kinetic energy thereof from one or more hydraulic pumps.

The manoeuvring means 4, which are arranged to adjust the position of the towing hitch 3 and the machining tool 2 included therein in relation to the basic vehicle 1, preferably comprise hydraulic manoeuvring means. However, there is nothing to prevent the manoeuvring means from being composed of electric spindle motors or corresponding means that allow a movement of the towing hitch to be carried out in order to turn the position of the towing hitch in relation to the longitudinal axis 8 in the basic vehicle.

In order to prevent the driver of the snow preparing machine from simultaneously having to operate both the basic vehicle and the position of the towing hitch 3 connected thereto in relation to the basic vehicle, the oscillatory motion of the towing hitch and the machining tool included therein as well as the steering of the basic vehicle are synchronized with the steering devices 5 of the vehicle. The steering device is arranged to have an effect both on the basic vehicle's motion in relation to the terrain thereof and the motion of the towing hitch relative to the basic vehicle. Such synchronization is formed by connecting the operation of the basic vehicle and the towing hitch mechanically, hydraulically, pneumatically or electrically.

The manoeuvring information signalled by the steering device 5 is hereby arranged to be conveyed to the transfer elements 6 and 7 of the basic vehicle 1 and to the manoeuvring means 4 adjusting the slewing angle of the machining tool 2 in relation to the basic vehicle. The conveyance of manoeuvring information can be carried out directly from the steering device to the transfer elements, and the manoeuvring means respectively. However, information may also be conveyed indirectly, in which case the information is only conveyed to one of the transfer elements or manoeuvring means. When one of the means has received the manoeuvring information, the information is arranged to be conveyed further to the remaining means so as to synchronize the steering of the means.

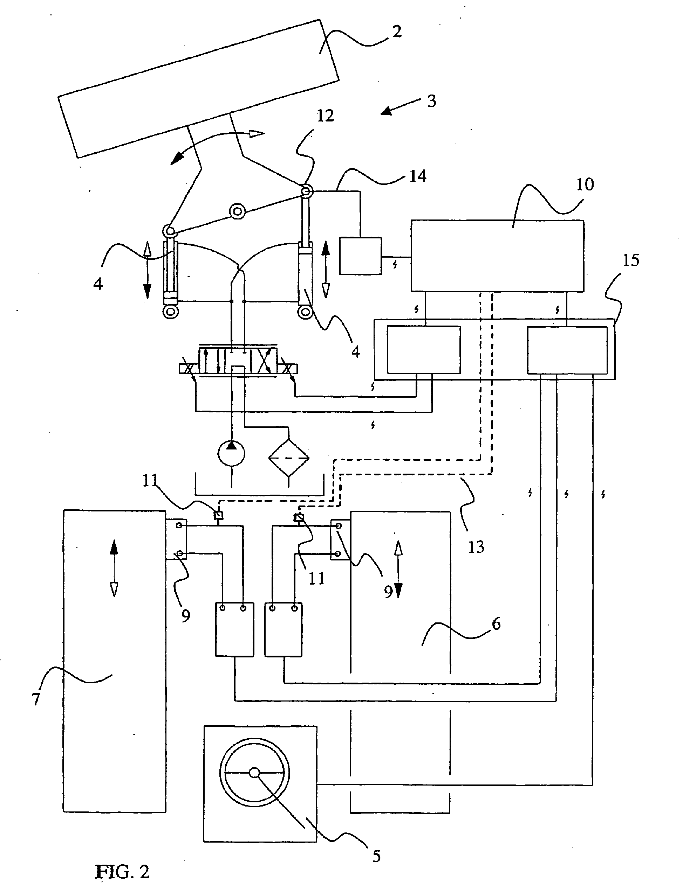

Figure 2 shows a preferred embodiment of an electronic automatized steering of the basic vehicle and the towing hitch. Here, the oscillatory motion of the towing hitch carrying tools is adjusted by means of a control arrangement 10 in accordance with the information obtained from the steering device 5 of the basic vehicle and/or from the variations in speed registered at the transfer elements 6 and 7. The control arrangement sends manoeuvring instructions through a steering unit 11, which is preferably conventionally arranged to handle the steering of the machine, to a mechanical, hydraulic, pneumatic or electric manoeuvring means 4 turning the towing hitch to a position that allows the tool to continuously follow the basic vehicle substantially in the tracks thereof.

A control arrangement according to the present structure comprises in addition to the information about the manoeuvring instructions provided to the transfer elements 6 and 7 by the steering device 5 one or more measuring elements 11 arranged to observe the operation of the transfer elements as well as position sensors 12 for observing the position of the manoeuvring means. In order to forward the correct manoeuvring instructions, a continuous comparison of the control data and/or measuring data supplied to the control arrangement is therefore carried out. This means that a comparison is arranged to take place in the control arrangement between the control data and/or measuring data using the manoeuvring instructions obtained from the control arrangement about the relation between on one hand the function of the transfer elements and the speed between them and on the other hand the position between the basic vehicle and the machining tool in relation to one another.

Similar manoeuvring information obtained from the control arrangement can for instance be composed of a particular pre-calculated table. The information may also be arranged to be continuously calculated by an algorithm included in the control arrangement based on the control or measuring data the arrangement has received. If the comparison conducted shows differences between the manoeuvring information obtained from the control arrangement and the control data and/or the measuring data, this results in renewed manoeuvring instructions from the control arrangement through the steering unit. Owing to the automatic synchronization, the driver may concentrate on steering the basic vehicle, without having to think about the turning properties of the machining tool at the back.

The performance of the transfer elements 6 and 7 can be observed using measuring elements 11 that measure the flow of pressure medium to the driving arrangements, and based on this flow the rotation direction and speed of the transfer elements are decided. The measuring element may also comprise an impulse generator arranged for instance in a hub included in the driving arrangement, or other appropriate means for the purpose to follow the rotation of the driving means and thus to decide the speed of the transfer element. The position sensors 12 included in the manoeuvring means 4 observe for instance the displacement of the means.

Information concerning the operation observed by the measuring element and the position sensors of the transfer elements and the manoeuvring means is arranged to be forwarded through information channels 13 and 14 to the control arrangement 10. Said information channel may be composed both of an electric, electronic, optic or of a wireless communication channel conveying information between two end stations.

When the control arrangement 10 has received information about the rotation direction and speed of the transfer elements 6 and 7 and about the displacement of the manoeuvring means 4, the control arrangement is arranged to substantially continuously compare the information with the optimal manoeuvring information loaded in the control arrangement or calculated by the control arrangement. Such manoeuvring information is calculated to provide the towing hitch as well as the machining tool arranged thereto with an optimal position relative to the basic vehicle. Thus, the centre points of the basic vehicle and the machining tool are aimed to be placed completely at or as close as possible to the turning radius that would appear with the towing hitch arranged at the provided angle in relation to the basic vehicle.

Manoeuvring instructions obtained knowing about the information supplied by the measuring elements 11 and the position sensors 12, are arranged to be conveyed from the control arrangement 10 to the steering unit 15, which handles the manoeuvring of the snow preparing machine. The steering unit then conveys the manoeuvring instructions to the manoeuvring means 4 arranged to steer the machining tool 2. If the manoeuvring instructions show a difference over the prior instructions received by the manoeuvring means, the means are arranged to take measures for manoeuvring the position of the machining tool in relation to the basic vehicle 1 in order to provide the towing hitch 3 as well as the machining tool arranged thereto a course of motion, which substantially corresponds to the course of motion of the basic vehicle. Thus, the longitudinal centre axes of the basic vehicle and the machining tool touch the turning radius that the different speeds of the transfer elements cause.

If the terrain is difficult and the basic vehicle 1 must be balanced in order to, for instance, prevent the machine from sliding downwards a slope or the top of a ridge, it is possible to inverse the manoeuvring instructions of the control arrangement 10. It is naturally also possible to disengage the towing hitch 3 from the automatic operation thereof in order to operate the towing hitch manually.

A control arrangement 10 according to the present design thus allows the synchronized steering of the basic vehicle 1 and the machining tool 2 connected to the towing hitch 3 to be carried out as inversed synchronized steering. Besides such a synchronization of the steering, the towing hitch can be manoeuvred manually or the towing hitch can be placed in a float position, in which the towing hitch can freely rotate about the hinge of the towing hitch. The control arrangement finally comprises an automatic centering ability that allows the towing hitch to turn to a centre position so that the hitch is substantially in line with the centre line of the basic vehicle. Naturally, a machining tool is connected to the basic vehicle arranged to normally both follow the terrain thereof during handling and to be able to be lifted up in an idle position, transfer position respectively, in spite of the synchronized steering.

The machining tool 2 is besides rotatably also adjustably relative to the basic vehicle 1 in order to obtain for instance different handling depths in the terrain. This occurs when the towing hitch is lifted up or lowered down in relation to the basic vehicle. The position of the towing hitch in relation to the basic vehicle is thus continuously controlled in order to send, if need be, necessary correcting information to the adjusting means arranged to attend to the handling depth. Instead of a normal mechanical parallel transportation, the control mentioned above as well as the adjusting means also allow varying the geometry of the parallel transportation electronically in order to move the geometrical hinge of the tool in this way.

With reference to Figures 1 and 2, the control arrangement described above operates as follows.

The basic vehicle 1 comprises a steering device 5 in the form of a steering wheel or at least a control lever. Such a steering device cooperates with a preferably electronic steering unit 15 in order to determine the direction and speed of the basic vehicle. The steering unit thus comprises preferably a program part arranged to read information concerning the position of the steering device, which is aimed to determine the speed of the transfer elements 6 and 7 in the basic vehicle, such as tracks, in order to indicate both the speed and the direction of the vehicle, which are dependent on the speed differences between the tracks. The steering unit sends a signal to the driving means 9 of the tracks, which preferably comprise hydraulic pumps and hydraulic motors driven thereby, which attend to the rotation of the tracks 6 and 7. The signal of the steering unit indicates the speed of the basic vehicle and the eventual turning radius thereof.

The signal sent from the steering unit 15 is also forwarded as information to the control arrangement 10, which reads the information about the turning radius of the basic vehicle 1. This information may therefore be read both from the signal of the steering unit to the driving means 9, as through the measuring elements 11 directly or indirectly in the transfer elements 6 and 7 or the driving means thereof. The control arrangement also receives information from the position sensors 12 concerning the position of the manoeuvring means of the towing hitch. The control arrangement converts all this information to a manoeuvring instruction, which is conveyed to the steering unit, from where it is sent to the manoeuvring means 4 of the towing hitch 3. The steering impulse is in turn converted to a mechanical movement in the manoeuvring means that moves the towing hitch towards the position that the program has calculated that it should be moved to.

Since the position sensors 12 included in the towing hitch 3 are arranged to continuously read the information about the position of the towing hitch relative to the basic vehicle 1, said information is sent to the control arrangement, which again compares the received position information with the earlier sent manoeuvring instruction, and corrects if necessary the steering impulse in an endless routine.

Manoeuvring instructions sent to the manoeuvring means 4 of the towing hitch are thus a product of the turning radius information obtained by the steering unit 15 from the control arrangement 10 in comparison with the information the control arrangement has obtained from the position sensors 12 of the towing hitch 3 and the measuring elements 11 of the transfer element 6.

In addition, the manoeuvring instructions are preferably influenced by a part of the program that determines what is known as the "ramp time", in other words how rapidly the correction of the manoeuvring instructions is to begin and by means of which acceleration the correction is to take place. Furthermore, the steering impulse may also be affected by a part of the program that determines the desired retardation of motion when the towing hitch is approaching the desired position.

The synchronized automatic system can naturally also be disconnected so that the towing hitch 3 can also be operated manually using separate breakers, locked, automatically centred or be placed in a float position after the basic vehicle 1.

The description and the figures associated therewith are merely intended to illustrate the present solution of aterrain-preparing machine. The solution is therefore not restricted to the embodiment described above , but several variations or alternative embodiments can be implemented within the scope defined in the appended claims.

## Claims

1. A terrain-preparing machine comprising
a control arrangement,
a basic vehicle (1),
at least one machining tool (2) and
at least one towing hitch (3) for connecting the basic vehicle (1) to the machinig tool(2); whereby
the basic vehicle (1) includes
driving arrangements (9) arranged to manoeuvre transfer elements (6, 7) preferably included in the basic vehicle (1) on two of the opposite sides thereof and arranged to move the terrain-preparing machine in relation to the terrain,
manoeuvring means (4) arranged to adjust the slewing angle of the machining tool (2) in relation to the basic vehicle(1), and
a steering device (5) which in cooperation with a steering unit (15), is arranged to adjust the speed of the driving arrangements (9) and thus the speed of the transfer elements (6, 7) in order to produce skid steering of the terrain-preparing machine,
the steering device (5) outputting manoeuvring instructions to the control arrangement,
**characterized in that**,
the control arrangement outputting manoeuvring information to the steering unit (15) in order to control the speed of the transfer elements (6, 7) and the position of the manoeuvring means (4) for synchronised steering of the terrain-preparing machine,
the control arrangement comprises:
measuring alements (11) for collecting speed information of the transfer elements (6, 7) and position sensors (12) for collecting speed information of the manoeuvring means (4),
means for comparing the speed information of the transfer elements (6, 7) and the position information of the manoeuvring means (4) with the manoeuvring instructions and
synchronising means adjusting the manoeuvring information output to the steering unit (15) in case of deviations of the collected speed and position information from the manoeuvring instructions.

2. A terrain-preparing machine according to claim 1, **characterised in that** the transfer elements (6, 7) comprise tracks.

3. A terrain-preparing machine according to claim 1 or 2, **characterised in that** the drive arrangements (9) comprise hydraulic motors.

4. A terrain-preparing machine according to anyone of claims 1 to 3, **characterised in that** the machining tool (2) comprises a snow groomer.

5. A method for manoeuvring a terrain-preparing machine with the following steps:
providing a terrain-preparing machine of claim 1, **characterised in that** manoeuvring information are output by the control arrangement to the steering unit (15) in order to control the speed of the transfer elements (6, 7) and the position of the manoeuvring means (4) for synchronized steering of the terrain-preparing machine, wherein speed information of the transfer elements (6, 7) is collected by measuring elements,
position information of the manoeuvring means (4) is collected by position sensors (12),
the speed information of the transfer elements (6, 7) and the position information of the manoeuvring means (4) is compared with the manoeuvring instructions and
the manoeuvring information output to the steering unit (15) are adjusted in case of the deviations of the collected speed and position information from the manoeuvring instructions for synchronized steering of the terrain-preparing machine.

## Patentansprüche

1. Geländebearbeitungsmaschine, welche aufweist:
eine Steuerungsanordnung,
ein Basisfahrzeug (1),
mindestens ein Bearbeitungswerkzeug (2) und
mindestens eine Anhängekupplung (3) zum Verbinden des Basisfahrzeugs (1) mit dem
Bearbeitungswerkzeug (2); wobei
das Basisfahrzeug (1) Folgendes aufweist:
Antriebsanordnungen (9), die dafür eingerichtet sind, Übertragungselemente (6, 7) zu manövrieren,
die vorzugsweise in dem Basisfahrzeug (1) auf zwei der gegenüberliegenden Seiten desselben enthalten sind und dafür eingerichtet sind, die Geländebearbeitungsmaschine in Bezug auf das Gelände zu bewegen,
Manövriermittel (4), die dafür eingerichtet sind, den Schwenkwinkel des Bearbeitungswerkzeugs (2) in Bezug auf das Basisfahrzeug (1) einzustellen, und eine Lenkvorrichtung (5), welche im Zusammenwirken mit einer Lenkeinheit (15) dafür eingerichtet ist, die Geschwindigkeit der Antriebsanordnungen (9) und somit die Geschwindigkeit der
Übertragungselemente (6, 7) einzustellen, um eine Rutschsteuerung (Skid-Steering, "Panzerlenkung") der Geländebearbeitungsmaschine zu bewirken,
wobei die Lenkvorrichtung (5) Manövrieranweisungen an die Steuerungsanordnung ausgibt,
**dadurch gekennzeichnet, dass**
die Steuerungsanordnung Manövrierinformationen an die Lenkeinheit (15) ausgibt, um die Geschwindigkeit der Übertragungselemente (6, 7) und die Position der Manövriermittel (4) für eine synchronisierte Lenkung der
Geländebearbeitungsmaschine zu steuern,
wobei die Steuerungsanordnung Folgendes umfasst:
Messelemente (11) zum Sammeln von Geschwindigkeitsinformationen der Übertragungselemente (6, 7) und Positionssensoren (12) zum Sammeln von Positionsinformationen der Manövriermittel (4),
Mittel zum Vergleichen der Geschwindigkeitsinformationen der
Übertragungselemente (6, 7) und der Positionsinformationen der Manövriermittel (4) mit den Manövrieranweisungen und
Synchronisiermittel, die im Falle von Abweichungen der gesammelten Geschwindigkeits- und Positionsinformationen von den Manövrieranweisungen die an die Lenkeinheit (15) ausgegebenen Manövrierinformationen anpassen.

2. Geländebearbeitungsmaschine nach Anspruch 1, **dadurch gekennzeichnet, dass** die Übertragungselemente (6, 7) Raupenketten aufweisen.

3. Geländebearbeitungsmaschine nach Anspruch 1 oder 2, **dadurch gekennzeichnet, dass** die Antriebsanordnungen (9) Hydraulikmotoren aufweisen.

4. Geländebearbeitungsmaschine nach einem der Ansprüche 1 bis 3, **dadurch gekennzeichnet, dass** das Bearbeitungswerkzeug (2) eine Pistenraupe aufweist.

5. Verfahren zum Manövrieren einer Geländebearbeitungsmaschine mit den folgenden Schritten:
Bereitstellen einer Geländebearbeitungsmaschine nach Anspruch 1, **dadurch gekennzeichnet, dass** Manövrierinformationen von der Steuerungsanordnung an die Lenkeinheit (15) ausgegeben werden, um die Geschwindigkeit der Übertragungselemente (6, 7) und die Position der Manövriermittel (4) für eine synchronisierte Lenkung der Geländebearbeitungsmaschine zu steuern, wobei
Geschwindigkeitsinformationen der Übertragungselemente (6, 7) von Messelementen gesammelt werden, Positionsinformationen der Manövriermittel (4) von Positionssensoren (12) gesammelt werden,
die Geschwindigkeitsinformationen der Übertragungselemente (6, 7) und die Positionsinformationen der Manövriermittel (4) mit den Manövrieranweisungen verglichen werden und
die an die Lenkeinheit (15) ausgegebenen Manövrierinformationen im Falle von Abweichungen der gesammelten Geschwindigkeits- und Positionsinformationen von den Manövrieranweisungen für eine synchronisierte Lenkung der Geländebearbeitungsmaschine angepasst werden.

## Revendications

1. Machine de préparation de terrain comprenant :
un dispositif de commande,
un véhicule de base (1),
au moins un outil de façonnage (2) et
au moins un attelage de remorquage (3) pour raccorder le véhicule de base (1) à l'outil de façonnage (2) ;
le véhicule de base (1) comprenant
des dispositifs d'entraînement (9) agencés de façon à manoeuvrer des éléments de transfert (6, 7) compris de préférence dans le véhicule de base (1) sur deux des côtés opposés de celui-ci et agencés de façon à déplacer la machine de préparation de terrain par rapport au terrain,
des moyens de manoeuvre (4) agencés de façon à régler l'angle d'orientation de l'outil de façonnage (2) par rapport au véhicule de base (1), et
un dispositif de direction (5) qui, en coopération avec une unité de direction (15), est agencé de façon à régler la vitesse des dispositifs d'entraînement (9) et ainsi la vitesse des éléments de transfert (6, 7) afin de produire une direction à glissement de la machine de préparation de terrain,
le dispositif de direction (5) envoyant des instructions de manoeuvre au dispositif de commande,
**caractérisée en ce que**
le dispositif de commande envoyant des informations de manoeuvre à l'unité de direction (15) afin de contrôler la vitesse des éléments de transfert (6, 7) et la position des moyens de manoeuvre (4) pour une direction synchronisée de la machine de préparation de terrain,
le dispositif de commande comprend :
des éléments de mesure (11) pour recueillir des informations sur la vitesse des éléments de transfert (6, 7) et des capteurs de position (12) pour recueillir des information sur la position des moyens de manoeuvre (4),
des moyens pour comparer les informations sur la vitesse des éléments de transfert (6, 7) et les informations sur la position des moyens de manoeuvre (4) avec les instructions de manoeuvre et
des moyens de synchronisation modifiant les informations de manoeuvre envoyées à l'unité de direction (15) en cas d'écarts des informations recueillies sur la vitesse et la position par rapport aux instructions de manoeuvre.

2. Machine de préparation de terrain selon la revendication 1, **caractérisée en ce que** les éléments de transfert (6, 7) comprennent des chenilles.

3. Machine de préparation de terrain selon la revendication 1 ou 2, **caractérisée en ce que** les dispositifs d'entraînement (9) comprennent des moteurs hydrauliques.

4. Machine de préparation de terrain selon l'une quelconque des revendications 1 à 3, **caractérisée en ce que** l'outil de façonnage (2) comprend une dameuse.

5. Procédé pour manoeuvrer une machine de préparation de terrain comprenant les étapes suivantes :
la fourniture d'une machine de préparation de terrain selon la revendication 1, **caractérisée en ce que** les informations de manoeuvre sont envoyées par le dispositif de commande à l'unité de direction (15) afin de contrôler la vitesse des éléments de transfert (6, 7) et la position des moyens de manoeuvre (4) pour une direction synchronisée de la machine de préparation de terrain, dans lequel
les informations sur la vitesse des éléments de transfert (6, 7) sont recueillies par des éléments de mesure,
les informations sur la position des moyens de manoeuvre (4) sont recueillies par des capteurs de position (12),
les informations sur la vitesse des éléments de transfert (6, 7) et les informations sur la position des moyens de manoeuvre (4) sont comparées avec les instructions de manoeuvre et
les informations de manoeuvre envoyées à l'unité de direction (15) sont modifiées en cas des écarts des informations recueillies sur la vitesse et la position par rapport aux instructions de manoeuvre pour une direction synchronisée de la machine de préparation de terrain.
